# FASCICULE DE BREVET EUROPEEN

(11) **EP 4 153 490 B1**
(45) Date de publication et mention de la délivrance du brevet: **13.03.2024**
(21) Numéro de dépôt: 21727831.6
(22) Date de dépôt: 19.05.2021
(51) Int. Cl.: B64G 1/00, B64G 1/40, B64G 1/24

(54) **PROCÉDÉ D'OPTIMISATION DU TRANSFERT D'ORBITE D'UN ENGIN SPATIAL À PROPULSION ÉLECTRIQUE ET SATELLITE METTANT EN OEUVRE LEDIT PROCÉDÉ**
VERFAHREN ZUR OPTIMIERUNG DES ORBITALEN TRANSFERS EINES ELEKTRISCH ANGETRIEBENEN RAUMFAHRZEUGS UND DAS VERFAHREN VERWENDENDER SATELLIT
METHOD FOR OPTIMISING THE ORBITAL TRANSFER OF AN ELECTRICALLY PROPELLED SPACECRAFT, AND SATELLITE USING SAID METHOD

(30) Priorité: 19.05.2020 FR 2005113
(43) Date de publication de la demande: 29.03.2023
(73) Titulaire: Airbus Defence and Space SAS, 31402 Toulouse Cedex 4 (FR)
(72) Inventeur: LAINE, Ivan, 31402 Toulouse cedex 4 (FR); MARTIN, Eric, 31402 Toulouse cedex 4 (FR); MAAG, Marie Catherine, 31402 Toulouse cedex 4 (FR); DIRAISON, Jean François, 31402 Toulouse cedex 4 (FR)
(74) Mandataire: Ipside
(86) Numéro de dépôt international: PCT/EP2021/063386
(87) Numéro de publication internationale: WO 2021/234054

(56) Documents cités:
- EP-A1- 2 977 321
- EP-A2- 1 059 232
- FR-A1- 2 829 104
- FR-A1- 3 032 427
- US-A- 5 595 360
- KLUEVER C A: "GEOSTATIONARY ORBIT TRANSFERS USING SOLAR ELECTRIC PROPULSION WITH SPECIFIC IMPULSE MODULATION", JOURNAL OF SPACECRAFT AND ROCKETS, AMERICAN INSTITUTE OF AERONAUTICS AND ASTRONAUTICS,REASTON,VA, US, vol. 41, no. 3, 1 mai 2004 (2004-05-01), pages 461-466, XP001201467, ISSN: 0022-4650

## Description

### DOMAINE TECHNIQUE

La présente invention appartient au domaine général de la mécanique spatiale, notamment des techniques de transfert d'orbite et de mise à poste d'engins spatiaux, et concerne plus particulièrement un procédé d'optimisation du transfert orbital d'un engin spatial, tel qu'un satellite artificiel, disposant d'une propulsion électrique.

Un tel procédé s'applique, par exemple, au transfert d'orbite d'un satellite de télécommunications entre une orbite initiale elliptique et une orbite finale circulaire, éventuellement géostationnaire, d'inclinaison différente, selon une approche de mise à poste par propulsion électrique connue par son sigle anglosaxon EOR (*Electric Orbit Raising*), qu'on pourrait traduire par « élévation électrique d'orbite ».

### ÉTAT DE L'ART

Pour réaliser la mise en orbite d'un engin spatial destiné à remplir une mission déterminée, il arrive qu'un lanceur place celui-ci dans une orbite elliptique dite d'injection ou de transfert dont le périgée avoisine l'altitude de culmination dudit lanceur et détermine l'altitude de l'apogée en fonction de la vitesse de l'engin spatial. En outre, l'inclinaison de l'orbite d'injection est généralement différente de celle de l'orbite visée, ou orbite de mission, car elle dépend principalement de la latitude du point de lancement. L'engin spatial rejoint ensuite son orbite de mission en exécutant les manoeuvres requises pour un transfert d'orbite donné.

Le transfert d'orbite peut être réalisé de différentes manières, bien connues, en fonction des spécificités de chaque lanceur et de chaque engin spatial (paramètres orbitaux à l'injection, nature de la propulsion, etc.). Les trajectoires possibles sont donc nombreuses et occasionnent des stratégies variées d'utilisation des ressources énergétiques de l'engin spatial et de gestion de la durée du transfert. Ainsi, le transfert d'orbite est apparu dès le début de la conquête spatiale comme un problème complexe d'optimisation qui se pose naturellement aux industriels de l'astronautique. De façon générale, ce problème d'optimisation consiste à déterminer parmi les stratégies possibles celles qui, entre deux orbites données, minimisent un certain coût. De façon plus pratique, ce problème peut s'énoncer comme suit : Étant donné un satellite artificiel en orbite autour de la Terre muni de moteurs, satellite qu'on souhaite transférer d'une orbite initiale, où par exemple il a été placé par le lanceur, à une orbite finale, où par exemple ledit satellite est opérationnel, à quels moments doit-on utiliser ces moteurs, dans quelle direction et avec quelle intensité de poussée afin d'effectuer ce transfert en minimisant une fonction de coût telle que la consommation d'ergols ou la durée dudit transfert ? Même si la formulation reste la même, on comprend aisément que l'optimisation d'un transfert d'orbite dépend de plusieurs paramètres tels que le type d'engin spatial, le type de propulsion utilisée, le coût à minimiser, l'environnement spatial, etc.

À titre d'exemple, le document US5595360A décrit une méthode d'optimisation du transfert orbital d'un engin spatial lancé dans une orbite d'injection autour d'un corps central et orienté dans une attitude prédéterminée, pour faire passer cet engin de l'orbite d'injection à une orbite géosynchrone. L'engin spatial comprend un propulseur électrique, une unité de commande dudit propulseur, cette unité de commande comprenant un moyen pour faire fonctionner le propulseur à des apogées d'orbites intermédiaires, pour augmenter successivement leurs périgées. Ce fonctionnement se poursuit jusqu'à ce que le demi grand-axe d'une orbite intermédiaire soit pratiquement égal au demi grand-axe de l'orbite géosynchrone, pour définir une orbite de transfert initiale pour l'engin spatial. Ensuite, le moyen fait fonctionner continuellement le propulseur pour faire passer l'engin spatial de l'orbite de transfert initiale à l'orbite géosynchrone, tout en maintenant l'égalité, en pratique, du demi-grand axe géosynchrone et du demi-grand axe de l'orbite de transfert.

La méthode proposée par cette solution s'apparente à l'approche EOR standard évoquée ci-après.

En règle générale, les satellites de télécommunications opérant en orbite géostationnaire GEO (*Geostationary Equatorial Orbit*) ne sont pas directement placés sur cette orbite par le lanceur. Les satellites sont souvent injectés dans une orbite de transfert géostationnaire GTO (*Geostationary Transfer Orbit*) puis transférés vers la GEO en parcourant une série d'orbites intermédiaires successives. Pour effectuer les manoeuvres nécessaires, les satellites utilisent leur propre système de propulsion suivant des plans de vol connus. Le transfert de la GTO vers la GEO est encore dominé par l'utilisation de la propulsion chimique. Récemment, quelques satellites ont été transférés ou sont en cours de transfert vers la GEO au moyen d'une propulsion électrique.

On connait l'approche EOR, pour la mise à poste de satellites par propulsion électrique, qui est l'application la plus récente de la propulsion plasma, ayant eu un impact notable dans l'industrie spatiale. En effet, l'utilisation de propulseurs plasma a permis des gains de masse conséquents. Un exemple de ce gain de masse est le lancement VA-237 par Ariane 5 le 2 juin 2017 qui a emporté deux satellites géostationnaires de télécommunications. Parmi ces satellites, le satellite Eutelsat-172B conçu par Airbus Defence and Space a effectué son transfert d'orbite uniquement par propulsion électrique, et était 55% plus léger que l'autre satellite pour une puissance électrique similaire, et donc une capacité opérationnelle similaire.

L'utilisation de l'EOR au lieu de la propulsion chimique pour la phase de transfert permet de réduire la masse d'ergols, et donc d'augmenter la masse sèche maximale admissible du satellite. Toutefois, la plupart des solutions d'optimisation du transfert d'orbite par propulsion électrique continuent de recourir à la propulsion chimique pour effectuer certaines étapes clés du transfert.

Par exemple, le document US7113851B1 décrit un procédé et un système de transfert d'orbite permettant à un satellite de s'échapper rapidement des ceintures de radiations de Van Allen tout en minimisant la masse de la charge utile et la durée de vie de la mission. Le satellite comprend des propulseurs chimiques à forte poussée, des propulseurs électriques à forte impulsion spécifique et un générateur solaire. Le satellite sort rapidement des ceintures de Van Allen en utilisant les propulseurs chimiques sur des apogées d'orbites intermédiaires, à partir de l'orbite de transfert initiée par un lanceur, pour élever successivement les périgées jusqu'à ce que le périgée franchisse lesdites ceintures. La masse de la charge utile et la durée de vie de la mission sont maximisées par l'utilisation de la propulsion électrique comme souligné plus haut.

Le document US2003062452A1 décrit un procédé de lancement d'un satellite en orbite qui optimise la masse du satellite délivrée en orbite, le satellite comportant des propulseurs chimiques et des propulseurs électriques. Ce procédé comprend une étape d'utilisation d'un propulseur chimique pour passer de l'orbite de transfert à une orbite intermédiaire et une étape d'utilisation d'un propulseur électrique, pour élever l'orbite de ladite orbite intermédiaire à une orbite géosynchrone finale, lors de laquelle ledit propulseur électrique est soumis à une régulation de la poussée pour produire des niveaux de poussée variables afin de fonctionner à un niveau d'impulsion spécifique optimal pour optimiser la masse amenée en orbite.

Néanmoins, des solutions d'optimisation du transfert d'orbite uniquement par propulsion électrique existent, comme celle décrite dans le document US2012097796A1 qui propose de déterminer la trajectoire optimale minimisant la masse en ajustant simultanément les paramètres orbitaux.

Les solutions purement électriques existantes restent assez complexes, avec des résultats peu probants, et ne permettent pas de couvrir des aspects problématiques de la mission spatiale tels que les radiations.

D'un autre côté, le document « KLUEVER C A : « GEOSTATIONARY ORBIT TRANSFERS USING SOLAR ELECTRIC PROPULSION WITH SPECIFIC IMPULSE MODULATION », JOURNAL OF SPACECRAFT AND ROCKETS. AMERICAN INSTITUTE OF AERONAUTICS AND ASTRONAUTES, REASTON, VA, US, vol. 41, no. 3, 1 mai 2004 (2004-05-01), pages 461-466, XP001201467. ISSN : 0022-4650 *»* décrit une méthode d'optimisation de transferts orbitaux utilisant une propulsion électrique par modulation d'impulsion spécifique. Il présente ainsi une approche numérique pour déterminer le profil optimal de l'impulsion spécifique pour des propulseurs à efficacité variable. Le procédé décrit concerne le transfert d'un satellite artificiel, d'une orbite initiale elliptique GTO vers une orbite finale GEO, le satellite empruntant au moins une orbite intermédiaire elliptique GTO. Ce procédé comprend en outre une étape de poussée maximale au voisinage de l'apogée pour les orbites de transfert initiales, et au voisinage du périgée pour les orbites de transfert finales.

### PRÉSENTATION DE L'INVENTION

La présente invention vise à pallier les inconvénients de l'art antérieur ci-dessus exposés, en particulier les limites des approches actuelles du transfert d'orbite par propulsion électrique en termes d'économie d'ergols, de prolongation de la durée de vie de la mission et de gestion des contraintes liés à l'environnement spatial.

À cet effet, la présente invention a pour objet un procédé de transfert d'un engin spatial, tel qu'un satellite artificiel, d'une orbite initiale elliptique vers une orbite finale dudit engin autour d'un corps de masse prépondérante, tel qu'une planète, ledit engin empruntant au moins une orbite intermédiaire elliptique propulsé par des moyens de propulsion électrique. Ce procédé est remarquable en ce qu'il comprend, lorsque l'engin spatial se trouve sur une orbite intermédiaire, une étape de poussée nominale, dans laquelle les moyens de propulsion génèrent une poussée nominale tant que ledit engin est sur au moins une partie d'un premier arc orbital passant en général par l'apogée de ladite orbite intermédiaire, et une étape de poussée minimale, dans laquelle les moyens de propulsion sont en partie arrêtés ou réduits en régime tant que ledit engin est sur au moins une partie d'un deuxième arc orbital passant en général par le périgée de ladite orbite intermédiaire, les deux arcs orbitaux étant complémentaires.

La poussée nominale peut correspondre à une poussée maximale. Selon un mode de réalisation particulièrement avantageux, les moyens de propulsion électrique comportent au moins un propulseur fixe optionnel, générant une poussée de direction parallèle à un axe Z lié l'engin spatial et tangentiel à la trajectoire dudit engin lors du transfert, et au moins deux assemblages déployables de propulsion, générant une poussée de direction orientable et comportant chacun au moins un propulseur, l'étape de poussée minimale consistant à arrêter tout propulseur fixe et à maintenir en marche un propulseur par assemblage déployable de propulsion.

Plus particulièrement, le premier arc orbital et le deuxième arc orbital de chaque orbite intermédiaire présentent une symétrie par rapport au grand axe de ladite orbite, le premier arc présentant normalement une longueur supérieure à celle du deuxième arc.

Avantageusement, le procédé comprend en outre une étape de transition de l'étape de poussée nominale à l'étape de poussée minimale et une étape de transition de l'étape de poussée minimale à l'étape de poussée nominale, chacune desdites étapes de transition comprenant des modifications progressives du régime de fonctionnement de tout ou partie des moyens de propulsion électrique de l'engin spatial.

Avantageusement, le procédé est mis en oeuvre par l'engin spatial de façon itérative sur une pluralité d'orbites intermédiaires successives tant que ledit engin n'a pas atteint l'orbite finale.

Selon un aspect avantageux de l'invention, les étapes de poussée nominale et les étapes de poussée minimale sont configurées de sorte à optimiser la consommation en ergols de l'engin spatial et la durée du transfert entre l'orbite initiale et l'orbite finale. Cela a pour but de prolonger la durée de vie de la mission à masse d'ergols constante ou d'augmenter la masse sèche de l'engin spatial à durée de vie constante.

Selon un autre aspect avantageux, pour toute orbite intermédiaire traversant une zone de radiations intenses, telle que les ceintures de radiations de Van Allen, les étapes de poussée nominale et les étapes de poussée minimale sont configurées de sorte à minimiser la durée du transfert.

Selon un mode de réalisation, l'engin spatial est un satellite de télécommunications destiné à être opérationnel dans une orbite géostationnaire, ledit satellite étant initialement placé dans une orbite d'injection d'inclinaison non nulle par un véhicule de lancement, le transfert dudit satellite de l'orbite d'injection vers l'orbite géostationnaire étant réalisé via une approche de mise à poste par propulsion électrique dite EOR (*Electric Orbit Raising*).

Selon un mode de réalisation, les moyens de propulsion électrique comprennent des propulseurs à effet Hall.

Selon l'invention, une batterie électrique de l'engin spatial est chargée par un générateur solaire dudit engin pendant l'étape de poussée minimale à un taux supérieur à un taux de charge de ladite batterie pendant l'étape de poussée nominale, pour fournir un support d'énergie audit engin lors de l'étape de poussée nominale.

Pendant l'étape de poussée minimale l'engin spatial stocke une énergie sur la batterie, et pendant l'étape de poussée nominale cette énergie est allouée à la poussée nominale.

Ainsi, une quantité d'énergie restante dans le générateur solaire, après la charge de la batterie durant l'étape de poussée réduite, est utilisée pour surchauffer l'engin spatial afin d'économiser de l'énergie lors d'une réinitialisation des opérations de régulation thermique pendant l'étape de poussée nominale.

La présente invention a également pour objet un engin spatial, de type satellite artificiel, sonde ou véhicule, mettant en oeuvre un tel procédé de transfert d'orbite après sa séparation d'un véhicule de lancement de type lanceur.

L'invention concerne également un procédé de commande à distance d'un tel engin spatial, dans lequel ledit engin est commandé à distance par un dispositif de commande déterminant successivement des signaux de commande et les envoyant audit engin pour la réalisation de tout ou partie des étapes du procédé de transfert, ledit dispositif comprenant au moins un système de contrôle et un système d'émission/réception basé au sol ou dans l'espace.

En outre, l'invention concerne un produit programme d'ordinateur, pouvant être installé dans l'engin spatial, comportant un ensemble d'instructions de code informatique qui, lorsqu'elles sont exécutées par un processeur, mettent en oeuvre un procédé de transfert d'orbite selon une ou plusieurs caractéristiques ci-dessus présentées.

Les concepts fondamentaux de l'invention venant d'être exposés dans leur forme la plus élémentaire, d'autres détails et caractéristiques ressortiront plus clairement à la lecture de la description qui suit et en regard des dessins annexés, donnant à titre d'exemple non limitatif un mode de réalisation d'un procédé d'optimisation du transfert d'orbite d'un engin spatial par propulsion électrique conforme aux principes de l'invention.

### BRÈVE DESCRIPTION DES FIGURES

Les figures sont données à titre purement illustratif pour l'intelligence de l'invention et ne limitent pas la portée de celle-ci. Les différents éléments sont représentés schématiquement et ne sont pas nécessairement à la même échelle. Sur l'ensemble des figures, les éléments identiques ou équivalents portent la même référence numérique.

Il est ainsi illustré en :
- Figure 1a : une vue en perspective d'un engin spatial sur une orbite initiale elliptique avant son transfert dans une orbite finale circulaire d'inclinaison différente ;
- Figure 1b : une vue partielle en plan de la figure 1a, l'altitude de l'apogée de l'orbite initiale étant supérieure à l'altitude de l'orbite circulaire ;
- Figure 2 : les principales phases du transfert d'orbite selon l'approche EOR ;
- Figure 3 : un graphique combiné de l'évolution temporelle des paramètres orbitaux lors d'un transfert EOR typique ;
- Figure 4 : un exemple de trajectoire possible lors d'un transfert EOR ;
- Figure 5 : les arcs orbitaux, d'efficacités de poussée minimale et maximale, sur une orbite intermédiaire elliptique ;
- Figure 6 : une vue partielle d'un exemple de satellite pour la mise en oeuvre du procédé d'optimisation du transfert d'orbite selon un mode de réalisation de l'invention ;
- Figure 7 : un diagramme des principales étapes d'un procédé d'optimisation du transfert d'orbite selon un mode de réalisation de l'invention ;
- Figure 8 : une séquence de passage du satellite dans l'arc orbital d'efficacité minimale d'une orbite intermédiaire ;
- Figure 9a : des courbes des économies de xénon obtenues par la mise en oeuvre du procédé d'optimisation dans différents cas ;
- Figure 9b : des courbes des prolongations des durées de vie obtenues par la mise en oeuvre du procédé dans différents cas ;
- Figure 10 : les courbes des évolutions temporelles des paramètres orbitaux obtenues par la mise en oeuvre du procédé selon l'invention ;
- Figure 11 : le principe d'application du procédé de l'invention selon une stratégie hybride adaptée aux lancements de faible inclinaison en présence de zones de radiations intenses ;
- Figure 12 : une comparaison des courbes d'économie de xénon et de prolongation de la durée de vie entre une stratégie de consommation minimum et une stratégie hybride.

### DESCRIPTION DÉTAILLÉE DE MODES DE RÉALISATION

Il convient de noter au préalable que certains dispositifs, systèmes et procédés bien connus de l'homme du métier sont ici décrits pour éviter toute insuffisance ou ambiguïté dans la compréhension de la présente invention.

Dans le mode de réalisation décrit ci-après, on fait référence à un procédé d'optimisation du transfert d'orbite d'un engin spatial, destiné principalement à une mise à poste par propulsion électrique d'un satellite de télécommunications opérant dans une orbite géostationnaire. Cet exemple, non limitatif, est donné pour une meilleure compréhension de l'invention et n'exclut pas l'application du procédé d'optimisation à d'autres types de transferts orbitaux, par exemple par propulsion hybride (chimique et électrique) d'une orbite elliptique vers une orbite géosynchrone ou circulaire quelconque.

Dans la suite de la description, les termes « satellite » et « transfert » désignent par extension, respectivement, un satellite artificiel et le transfert d'orbite d'un tel satellite, au sens de la mécanique spatiale. Par ailleurs, la terminologie employée ne doit en aucun cas être interprétée de manière limitative ou restrictive, mais simplement en conjonction avec certains modes de réalisation particuliers de l'invention.

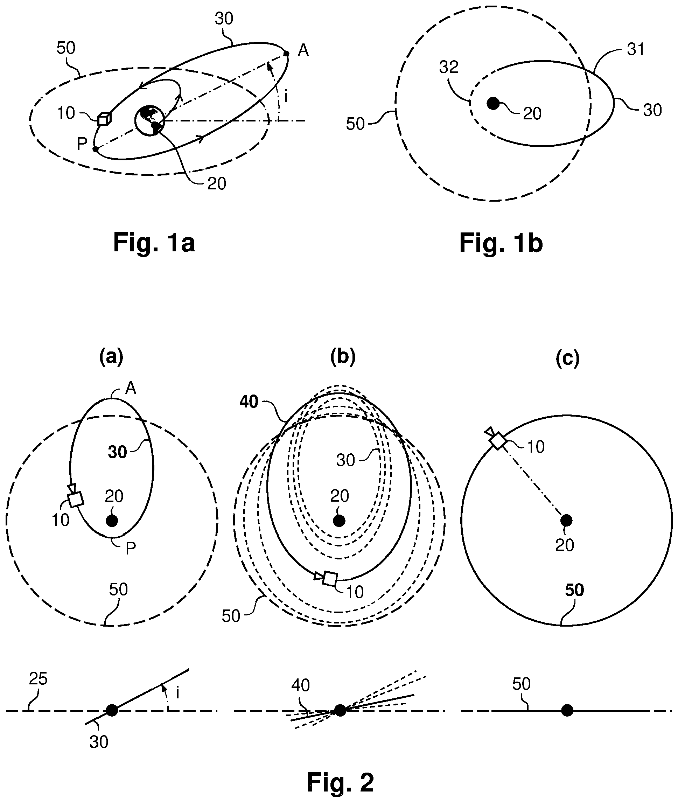

La figure 1a représente schématiquement un satellite 10 lancé à partir d'une position sur un astre 20 de masse prépondérante tel que la Terre et injecté par un lanceur, non représenté, dans une orbite initiale 30 elliptique, dite orbite d'injection, suivant des séquences prédéterminées de lancement et de séparation en fonction des paramètres et de la configuration du lanceur. Le satellite 10 est destiné à rejoindre une orbite finale 50 géostationnaire, dite orbite de mission, dans laquelle il est opérationnel, en effectuant un transfert d'orbite.

Seul le cas des satellites « tout électrique » pour lesquels ce transfert d'orbite correspond à une mise à poste par propulsion électrique selon l'approche EOR (*Electric Orbit Raising*) sera considéré.

Dès l'achèvement de la séquence de séparation, par le désengagement du dernier étage du lanceur en fin de combustion du satellite 10, ce dernier continue, de façon autonome, sur l'orbite d'injection 30 qui présente un périgée P, un apogée A et une inclinaison i par rapport au plan de l'orbite géostationnaire 50 visée. L'injection s'effectue au niveau du périgée P, souvent dans son voisinage immédiat, avec une certaine vitesse qui détermine ensuite l'altitude de l'apogée A et l'excentricité de l'orbite d'injection 30. Cette altitude peut être supérieure à l'altitude géostationnaire comme le montre clairement la figure 1b.

Le transfert EOR permet au satellite de rejoindre l'orbite géostationnaire 50 et s'accompagne d'une modification progressive des paramètres orbitaux précités.

La figure 2 schématise le déroulement d'un transfert EOR conventionnel. En effet, après l'injection du satellite 10 dans son orbite d'injection 30 par le lanceur, le transfert se poursuit de façon autonome avec trois phases : une phase (a) d'initialisation, une phase (b) de mise à poste (transfert proprement dit) et une phase (c) de maintien à poste.

La phase d'initialisation est comprise entre l'injection et le début des manoeuvres de transfert. Durant cette phase, les paramètres orbitaux ne changent pas et les systèmes du satellite 10 sont initialisés, vérifiés et préparés à la phase de mise à poste autonome. Cela inclut, entre autres, le mode de pointage du Soleil suivi par le déploiement des panneaux solaires, les tests en orbite des redondances, de la propulsion électrique et de la plateforme du satellite.

La phase de mise à poste correspond au transfert EOR lui-même, lors duquel le satellite 10 est totalement autonome, et effectue de manière continue les manoeuvres nécessaires pour rejoindre son orbite géostationnaire 50 de mission en passant par des orbites intermédiaires 40 successives. Durant cette phase, la position du satellite 10 et l'ensemble des systèmes embarqués sont contrôlés et commandés à distance, par télémétrie ou tout autre moyen connu de communication à distance.

Enfin, la phase de maintien à poste (*on-station mode*) correspond à l'évolution opérationnelle du satellite 10 sur son orbite de mission 50, ledit satellite pointant vers la Terre 20. Des tests préliminaires de télécommunication peuvent en outre être réalisés durant cette phase.

Le procédé d'optimisation selon l'invention s'applique essentiellement à la phase (b) de mise à poste qu'on peut indifféremment confondre avec le transfert EOR. Avant de détailler les étapes de ce procédé, il convient tout d'abord de rappeler très brièvement le déroulement d'un transfert EOR conventionnel, actuellement utilisé pour placer des satellites en orbite géostationnaire à partir d'une orbite elliptique d'inclinaison différente (non nulle).

En référence à la figure 2, le satellite 10 se trouve initialement sur l'orbite d'injection 30 qui présente une inclinaison i, correspondant à l'angle formé par le plan de ladite orbite et le plan principal 25 de la Terre 20 (plan équatorial). Ensuite, le satellite 10 entame progressivement des transferts entre des orbites intermédiaires 40 successives le menant à l'orbite géostationnaire 50. Ainsi, les paramètres orbitaux, à savoir l'altitude de l'apogée A, l'altitude du périgée P et l'inclinaison i, évoluent jusqu'à atteindre des valeurs sensiblement égales à celles de l'orbite géostationnaire 50. Dans un premier temps, l'altitude de l'apogée, initialement supérieure à l'altitude géostationnaire, croît légèrement puis décroît dans un second temps jusqu'à atteindre l'altitude géostationnaire. Cette variation s'accompagne d'une croissance monotone de l'altitude du périgée jusqu'à atteindre l'altitude géostationnaire, auquel cas l'orbite se « circularise », et d'une décroissance de l'inclinaison jusqu'à la valeur de l'inclinaison de l'orbite géostationnaire 50, à savoir 0° (orbite contenue dans le plan équatorial 25).

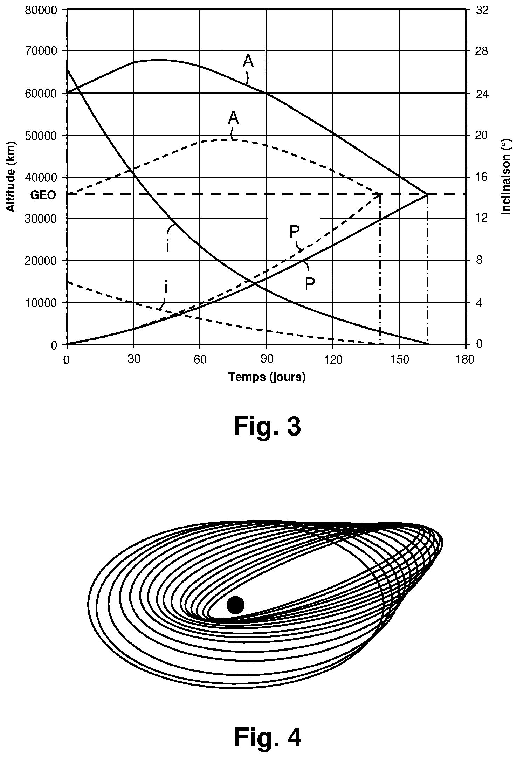

La figure 3 est un graphique de l'évolution temporelle des paramètres orbitaux lors d'un transfert EOR typique, mesurée pour deux lanceurs différents : Ariane (courbes en trait interrompu) et un lanceur à forte inclinaison (courbes en trait continu). Ces deux lanceurs se distinguent fondamentalement par l'inclinaison de leurs orbites d'injection. Le premier présente une inclinaison d'environ 6° et correspond donc à un lanceur dit à faible inclinaison, tandis que le deuxième présente une inclinaison d'environ 26° et correspond à un lanceur dit à forte inclinaison. La comparaison de deux lanceurs injectant à des inclinaisons « extrêmes » se révèlera pertinente par la suite dans la prise en compte de certains phénomènes, tels que le passage du satellite dans les ceintures de radiations de Van Allen, pour la mise en oeuvre du procédé d'optimisation.

Conformément à l'analyse qualitative établie en regard de la figure 2, on constate sur la figure 3, pour les deux lanceurs, une augmentation puis une diminution de l'altitude de l'apogée A jusqu'à l'altitude de l'orbite géostationnaire GEO, ainsi qu'une augmentation de l'altitude du périgée P pour atteindre l'altitude GEO en même temps que l'altitude de l'apogée, l'inclinaison diminuant quant à elle continuellement pour atteindre une inclinaison nulle.

En des termes imagés, les orbites de transfert elliptiques, initiale 30 et intermédiaires 40, « se circularisent » et « s'élèvent » progressivement pour se confondre avec l'orbite géostationnaire 50. Au vu de l'évolution continue des paramètres orbitaux selon les sens de variation indiqués, le transfert EOR correspond à une trajectoire complexe spiroïdale autour de la Terre comme représentée sur la figure 4.

Néanmoins, le transfert EOR comprend pour chaque orbite de transfert, d'injection 30 ou intermédiaire 40, deux phases principales : une phase tangentielle et une phase inertielle. La première correspond à un régime de propulsion du satellite dans lequel la poussée est essentiellement tangentielle de sorte à augmenter le demi-grand axe de l'orbite. La deuxième correspond à un régime de propulsion avec une poussée essentiellement inertielle, ou gravitationnelle, de sorte à réduire l'excentricité de l'orbite. La diminution de l'excentricité jusqu'à une valeur nulle correspondant à l'orbite finale 50 circulaire ressort clairement des figures 2 et 4.

De ce fait, le procédé d'optimisation selon la présente invention se base sur les spécificités de chacune des phases précitées pour assurer une utilisation optimisée des propulseurs du satellite lors du transfert, et donc une meilleure gestion de la puissance disponible, comme expliqué plus loin.

Pour l'optimisation du transfert EOR, plusieurs contraintes sont prises en compte, dont les plus importantes sont : la durée maximale du transfert, la durée maximale des éclipses et l'altitude minimale du début du transfert.

La durée maximale du transfert a un impact direct sur la dose de radiations cumulée lors du transfert. Il s'agit d'une limite à ne pas dépasser pour se conformer aux spécifications des panneaux solaires relatives à la dose de radiations reçue lors du transfert tout en respectant les marges requises. Cette limite couvre les durées cumulées de la phase d'initialisation et de la phase de mise à poste. Par ailleurs, la durée maximale du transfert correspond également à une limite fixée pour éviter tout retard dans l'utilisation opérationnelle du satellite.

La durée maximale des éclipses a un effet thermique sur le satellite et ses équipements, et doit être en accord avec la qualification thermique des panneaux solaires en particulier.

L'altitude minimale du début du transfert doit être compatible avec les effets de trainée admissibles sur les panneaux solaires et leurs mécanismes d'entrainement, conforme à la qualification des propulseurs électriques par rapport à la pression ambiante maximale, et en accord avec les aspects d'érosion par oxygène atomique (ATOX).

Ces principales contraintes permettent de définir et de régler des opérations de base du procédé d'optimisation, consistant à moduler la poussée des propulseurs, et plus précisément son intensité, en fonction de la position du satellite sur l'orbite de transfert. En effet, l'efficacité de la poussée générée par le système de propulsion du satellite varie en fonction de la position dudit satellite sur chaque orbite de transfert elliptique. Par conséquent, une stratégie de commande selon laquelle la poussée varie en intensité sur chaque orbite intermédiaire permettrait de réduire la consommation d'ergols en comparaison avec les stratégies de l'art antérieur selon lesquelles la poussée est maintenue constante.

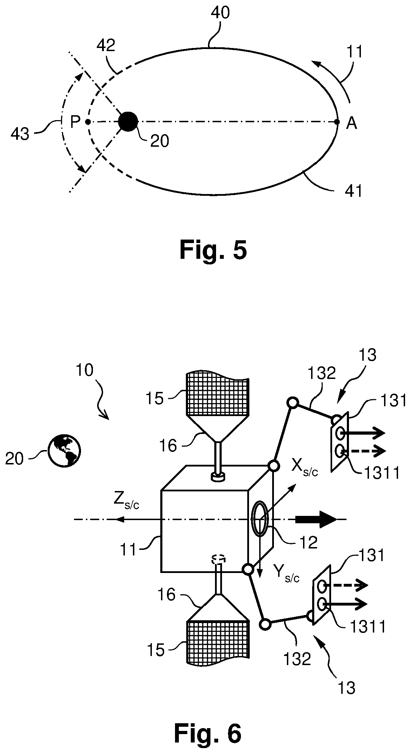

La figure 5 représente une orbite intermédiaire 40 sur laquelle sont indiqués deux arcs 41 et 42 délimitant grossièrement la variation de l'efficacité de la poussée mentionnée supra. En effet, l'orbite 40 présente un premier arc 41, en trait continu, d'efficacité maximale, et un deuxième arc 42, en trait interrompu, complémentaire du premier, d'efficacité minimale, lesdits arcs présentant chacun une symétrie par rapport au grand axe de l'orbite elliptique 40.

L'arc d'efficacité maximale 41 passe par l'apogée A et s'étend sur une majeure partie de l'orbite dans laquelle la vitesse gravitationnelle du satellite est la moins importante (loi des aires). Ainsi, l'effet de la poussée du satellite est moins dominé par le mouvement inertiel du satellite et l'efficacité de ladite poussée est donc maximale lors de cette phase.

L'arc d'efficacité minimale 42 passe quant à lui par le périgée P et correspond à la partie de l'orbite dans laquelle la vitesse gravitationnelle du satellite est la plus importante. Ainsi, l'effet de la poussée du satellite est plus dominé par le mouvement gravitationnel. L'efficacité de la poussée est donc minimale lors de cette phase.

De ce fait et dans un premier temps, le procédé d'optimisation du transfert d'orbite consiste à réduire la poussée du satellite sur au moins une portion 43 de l'arc d'efficacité minimale 42 et à l'augmenter sur l'arc d'efficacité maximale 41 de sorte à mieux utiliser la puissance de propulsion disponible et à réduire la consommation d'ergols.

Partant de ce principe, on va détailler un exemple de réalisation particulier du procédé appliqué à un satellite présentant une architecture propulsive spécifique, non limitative, montrée sur la figure 6.

La figure 6 représente schématiquement un satellite 10 équipé des systèmes nécessaires pour effectuer un transfert EOR. Ce satellite comporte principalement un corps 11, un propulseur central fixe 12 optionnel, de direction de poussée fixe, deux assemblages mobiles de propulsion 13, de direction de poussée orientable, et deux panneaux solaires 15 montés rotatifs selon un même axe de part et d'autre du corps 11 au moyen de mécanismes de déploiement 16. Le satellite 10 définit un repère satellite classique comportant trois axes : un axe Z, tangentiel à la trajectoire lorsque le satellite se trouve en orbite de transfert (donc parallèle au vecteur vitesse du satellite) et radial dirigé vers le centre de la Terre lorsque ledit satellite se trouve en orbite géostationnaire, et des axes X et Y formant avec l'axe Z un trièdre direct.

Le propulseur central fixe 12 est un propulseur à effet Hall HET (*Hall-Effect Thruster*) et présente une direction de poussée parallèle à l'axe Z du satellite 10. Le satellite peut comporter d'autres propulseurs fixes additionnels.

Chaque assemblage mobile de propulsion 13 comporte un module de propulsion 131, comprenant au moins un propulseur 1311, et un mécanisme 132 permettant l'orientation dudit module. Les assemblages de propulsion 13 sont articulés sur des faces opposées du corps 11, par exemple sur les faces Nord et Sud du satellite.

Plus particulièrement, chaque module de propulsion 131 est un module de propulsion à plasma, composé d'une plaque structurale dans laquelle sont installés les propulseurs 1311 ainsi que des contrôleurs de débit massique. Cette plaque assure également une isolation thermique des propulseurs et des contrôleurs de débit. Selon l'exemple illustré, chaque module 131 est pourvu de deux propulseurs 1311, par exemple un propulseur nominal et un propulseur redondant dont les poussées sont représentées, respectivement, par une flèche continue et une flèche interrompue. En outre, les mécanismes 132 font partie de systèmes de déploiement et de pointage qui fournissent également la motorisation nécessaire pour obtenir la cinématique requise.

Pour l'alimentation des propulseurs électriques 12 et 13, le satellite comporte des réservoirs, non représentés, adaptés pour recevoir un volume d'ergols sous forme de gaz, par exemple de xénon.

Parmi les systèmes nécessaires permettant, entre autres, d'effectuer le transfert EOR, le satellite 10 comprend un système de détermination et de contrôle de l'attitude ADCS (*Attitude Determination and Control System*) basé sur la visée d'étoiles et utilisé pour contrôler ledit satellite après sa séparation du lanceur au moyen des actionneurs disponibles (roues de réaction et propulseurs). L'ADCS permet également de pointer en permanence les panneaux solaires 15 vers le Soleil pendant le transfert, de manière à fournir la puissance nécessaire à des unités d'alimentation électrique et de gestion de puissance PPU (*Power Processing Unit*) via des régulateurs spécifiques. Les PPU contrôlent et alimentent les propulseurs, pendant leur allumage, en courant électrique à la tension d'entrée requise. Les propulseurs à effet Hall sont alimentés en xénon par un système de régulation de la pression de xénon, qui adapte la pression au point de fonctionnement des propulseurs requis pendant la mission.

Le mécanisme 132 de chaque assemblage de propulsion 13 comprend trois articulations présentant chacune au moins un degré de liberté en rotation, autour d'axes différents, de sorte à libérer tous les degrés de mobilité du module de propulsion 131 associé. Ainsi, les assemblages de propulsion 13 sont déployés en position dite "EOR" durant le transfert (direction de la poussée des propulseurs 1311 parallèle à l'axe Z du satellite), cette position étant celle de la figure 6, puis en position dite "on-station", non représentée, durant le maintien à poste (direction de la poussée pointant le centre de masse du satellite).

Un exemple de satellite 10, mettant en oeuvre le procédé d'optimisation du transfert, venant d'être sommairement décrit, on va maintenant présenter un mode de réalisation dudit procédé.

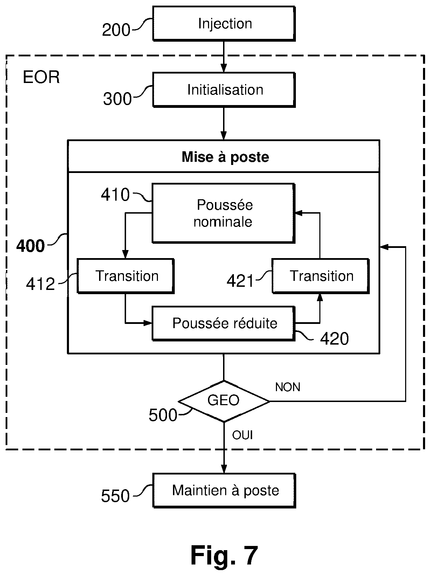

En référence à la figure 7, le procédé d'optimisation du transfert EOR concerne la phase de mise à poste 400, entre l'initialisation 300 et le maintien à poste 550, et comprend les étapes suivantes selon un cycle itératif :
- une étape 410 de poussée nominale ;
- une étape 412 de transition d'une phase de poussée nominale à une phase de poussée réduite ;
- une étape 420 de poussée réduite ; et
- une étape 421 de transition inverse, d'une phase de poussée réduite à une phase de poussée nominale.

Bien entendu, le nombre d'itérations nécessaires pour que le satellite rejoigne l'orbite géostationnaire de mission est déterminé dans le plan de vol initial et l'objectif de cette séquence alternée de régimes de propulsion est d'optimiser la consommation de xénon.

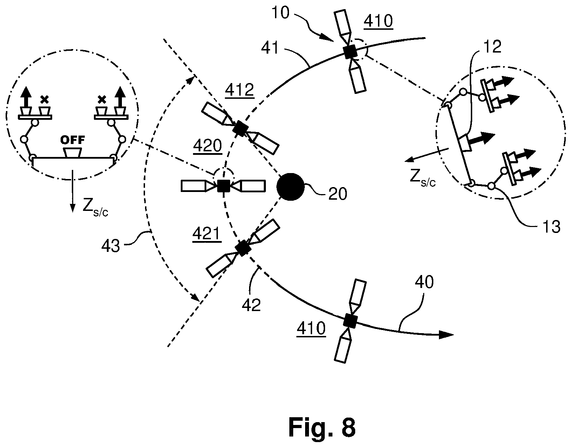

La figure 8 permet d'illustrer les étapes énumérées ci-dessus mises en oeuvre sur une orbite de transfert 40, chacune sur une partie précise de ladite orbite.

L'étape 410 de poussée nominale correspond à une utilisation continue et simultanée des propulseurs du satellite 10 à leur régime nominal sur l'arc d'efficacité maximale 41. Il s'agit de la même configuration que celle d'un transfert EOR conventionnel. Cela se traduit pour le satellite 10, selon l'exemple de la figure 6, par une utilisation continue et simultanée d'au moins cinq propulseurs (le propulseur fixe 12 et les deux propulseurs 1311 de chaque assemblage de propulsion 13) à 300V et avec une poussée maximale qui correspond à la puissance maximale pouvant être allouée aux systèmes de propulsion.

En revanche, l'étape 420 de poussée réduite se déroule sur l'arc d'efficacité minimale 42 et consiste à utiliser une partie des propulseurs, l'autre partie étant arrêtée. En référence à la figure 6, cette étape peut être mise en oeuvre par l'arrêt du propulseur fixe 12 et le maintien en marche d'un seul propulseur 1311 par assemblage de propulsion 13, au régime 3kW / 375V par exemple, les autres étant éteints. Idéalement, chaque propulseur d'un assemblage de propulsion 13 est utilisé de façon périodique. Par exemple, chaque deux semaines, les propulseurs 1311 de chaque assemblage de propulsion sont alternés pour l'étape 420 de poussée réduite.

Les étapes de transition entre les deux modes de poussée, nominale à réduite 412 et réduite à nominale 421, sont effectuées sans aucun arrêt des propulseurs des assemblages de propulsion. La puissance et la tension de fonctionnement de ces propulseurs sont ajustées au niveau de chaque PPU sans aucune interruption. Simultanément à la modification du mode de fonctionnement de ces assemblages de propulsion, le propulseur central fixe et éventuellement un propulseur par assemblage de propulsion sont mis en marche et arrêtés automatiquement par le logiciel embarqué.

Selon ce cycle de fonctionnement avantageux, alternant poussée nominale et poussée réduite sur chaque orbite de transfert, le maintien en marche d'un propulseur par assemblage de propulsion permet d'un côté de conserver la capacité de déchargement des roues de réaction avec les assemblages de propulsion et d'un autre côté de générer en permanence un plasma qui préserve l'équilibre et la sécurité électrostatiques du satellite et ce, quelles que soient les conditions extérieures (éclipse ou ensoleillement). Par conséquent, les autres propulseurs électriques du satellite peuvent être mis en marche ou arrêtés sans aucune contrainte liée aux éclipses, autrement dit, les phases de poussée réduite peuvent être démarrées ou arrêtées sans aucune contrainte. En outre, le régime 3kW / 375V a été sélectionné pour les phases de poussée réduite car il correspond au régime le moins consommateur (le débit de xénon est le plus faible) tout en ayant l'impulsion spécifique (Iₛₚ) la plus élevée.

Les essais de qualification des propulseurs électriques permettent de couvrir tous les aspects de la mise en oeuvre du procédé d'optimisation selon l'invention.

Par exemple, la multiplication des mises en marche/arrêt (ON/OFF) du propulseur fixe correspond au nombre de phases de poussée réduite lors d'un transfert optimisé, ce nombre, généralement de quelques centaines de phases, est largement couvert par la qualification des propulseurs électriques qui inclut des milliers de cycles de marche/arrêt répétés.

En outre, la mise en oeuvre du procédé d'optimisation est en parfaite adéquation avec la qualification des autres systèmes du satellite tels que les unités d'alimentation électrique PPU, les unités de sélection de la propulsion plasma, les régulateurs de pression de xénon, les propulseurs orientables, les mécanismes d'entrainement et de déploiement des panneaux solaires, les roues de réaction et les batteries.

Afin d'évaluer les avantages du procédé d'optimisation, les inventeurs ont considéré différents cas en fonction de la masse sèche et du nombre de propulseurs électriques du satellite. Parmi ces cas, seuls les cas listés dans le tableau ci-dessous seront analysés dans la présente description :

| | Masse sèche | Nombre de propulseurs | Régime nominal | Consommation de xénon* |
|---|---|---|---|---|
| Cas 1 | 3000kg | 3 | 4,5kW / 300V | ∼ 10kg/an |
| Cas 2 | 4000kg | 3 | 4,5kW / 300V | ∼ 15kg/an |
| Cas 3 | 4000kg | 5 | 4,5kW / 300V | ∼ 15kg/an |
| Cas 4 | 5500kg | 5 | 4,5kW / 300V | ∼ 21kg/an |

| | | | | |
|---|---|---|---|---|
| * Durant la phase de maintien à poste du satellite. | | | | |

Il convient de noter que le régime de fonctionnement renseigné correspond à la phase de poussée nominale et que lors des phases de poussée réduite, les propulseurs des assemblages mobiles opèrent à 3kW / 375V.

Pour des raisons évidentes de simplification, seuls les lanceurs Ariane ont été considérés avec, pour l'ensemble des cas, les mêmes paramètres de séparation (6° / 250km / 35786km). Toutefois, le procédé d'optimisation reste applicable à un lanceur quelconque, en particulier aux lanceurs utilisés actuellement pour la mise en orbite de satellites de télécommunications. Les inventeurs ont noté les points de concordance et d'analogie suivants : l'expérience déjà acquise a montré des résultats très similaires pour les lanceurs à forte inclinaison et les lanceurs Ariane, même si l'optimisation dans le cas des lanceurs à forte inclinaison est légèrement moins attractive puisque la phase EOR avec de tels lanceurs est en général plus longue ; les lanceurs Ariane ont été préférés parce qu'ils offrent durant la phase EOR l'environnement radiatif le plus important et que les impacts radiatifs liés à la mise en oeuvre du procédé d'optimisation doivent être maitrisés ; d'autres lanceurs offrent la possibilité d'appliquer des stratégies similaires et sont également concernés par des cas supplémentaires que les inventeurs ont inclus dans leur étude.

Ainsi, les différentes comparaisons ont permis d'établir que les résultats obtenus, dont certains sont présentés ci-après, restent parfaitement valables pour des lanceurs à forte inclinaison et que les stratégies d'optimisation selon l'invention permettent dans ces cas une prolongation surprenante de la durée de vie du satellite de 4 ans (contre 6 ans pour les cas à faible inclinaison), certes un peu moins attractive mais tout autant considérable.

Dans tous les cas 1 à 4, l'optimisation du transfert EOR a été calculée en supposant une stratégie de durée minimum puis une extension de la durée dudit transfert EOR de 7, 14, 21 et 28 jours selon une stratégie dite de consommation minimum. Ces données ont été utilisées dans les calculs de dynamique du vol en plus des données du tableau précédent. L'extension de durée du transfert EOR a été limitée à 28 jours. Il a été supposé qu'une durée plus longue n'est pas souhaitable pour les clients finaux car elle retarderait considérablement le début de la phase opérationnelle du satellite. Pour tous les cas, le réservoir de xénon est chargé pour une durée de vie de 15 ans.

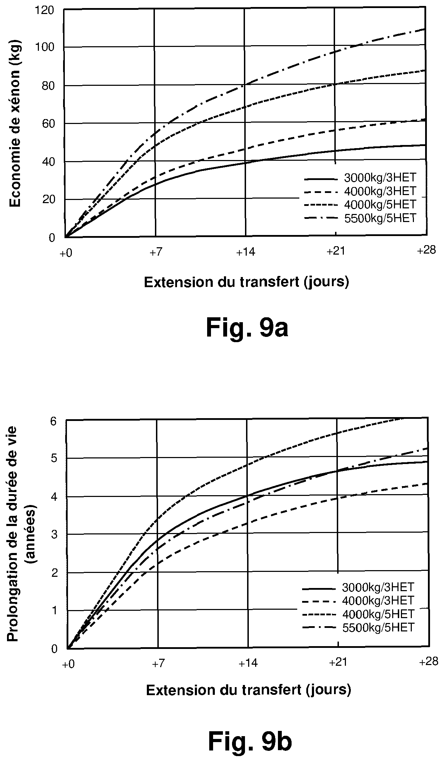

Les principaux avantages du procédé d'optimisation sont illustrés par les graphiques des figures 9a et 9b qui montrent, respectivement, l'économie de xénon et la prolongation de la durée de vie en fonction des différentes extensions de la durée du transfert EOR, obtenues pour chaque cas.

En ce qui concerne l'optimisation du transfert en fonction du nombre de propulseurs exploités simultanément pendant les phases de poussée nominale, les figures 9a et 9b montrent clairement l'intérêt d'utiliser plus de propulseurs simultanément pendant ces phases. Pour une extension de 7 jours, l'ajout de deux propulseurs (cas 2 vs cas 3) permet une prolongation de la durée de vie d'environ un an, et d'environ deux ans pour une extension de 28 jours. Dans une moindre mesure, l'ajout d'un propulseur supplémentaire pendant les phases de forte poussée permet un gain de durée de vie d'environ un an pour une extension du transfert de 28 jours, ce résultat n'étant pas représenté.

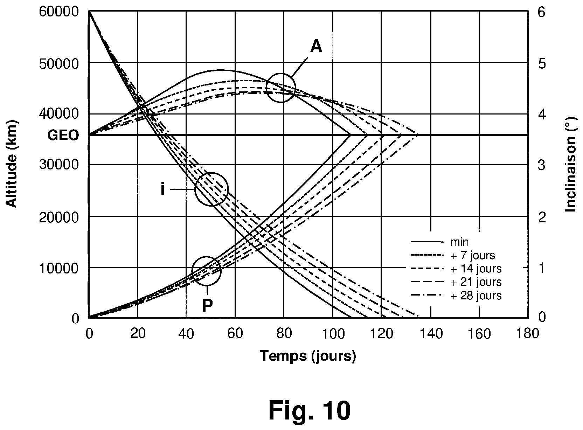

La figure 10 montre quant à elle l'évolution temporelle des paramètres orbitaux (altitude de l'apogée A, altitude du périgée P et inclinaison i) pour les différentes extensions du transfert EOR (+7, +14, +21 et +28 jours). L'extension de la durée du transfert EOR tend à réduire l'altitude maximale de l'apogée pendant la phase EOR (aplatissement des courbes d'altitudes d'apogée). Cette conséquence peut s'expliquer par le fait que les phases de poussée réduite se déroulent, pendant la première moitié du transfert EOR, essentiellement dans la partie périgée de chaque orbite de transfert où l'altitude d'apogée est augmentée par la poussée.

Il convient de noter que l'extension de la durée du transfert EOR implique une modification de l'environnement radiatif du satellite, notamment lors des passages dans les ceintures de radiations de Van Allen.

Des résultats obtenus par les inventeurs confirment que l'environnement défini pour une approche EOR classique couvre toutes les approches optimisées possibles, avec tout type de lanceur, quel que soit le nombre de propulseurs exploités simultanément et quelle que soit la stratégie d'optimisation : temps minimum ou consommation minimum.

Pour les cas 1 à 4 détaillés ci-avant, correspondant aux cas critiques des lanceurs Ariane pour lesquels les doses de radiations des panneaux solaires sont les plus élevées, la mise en oeuvre du procédé d'optimisation du transfert EOR avec une stratégie de consommation minimum de xénon peut s'avérer problématique en raison des extensions de la durée dudit transfert et, par là-même, de la durée des passages dans les zones de radiations intenses.

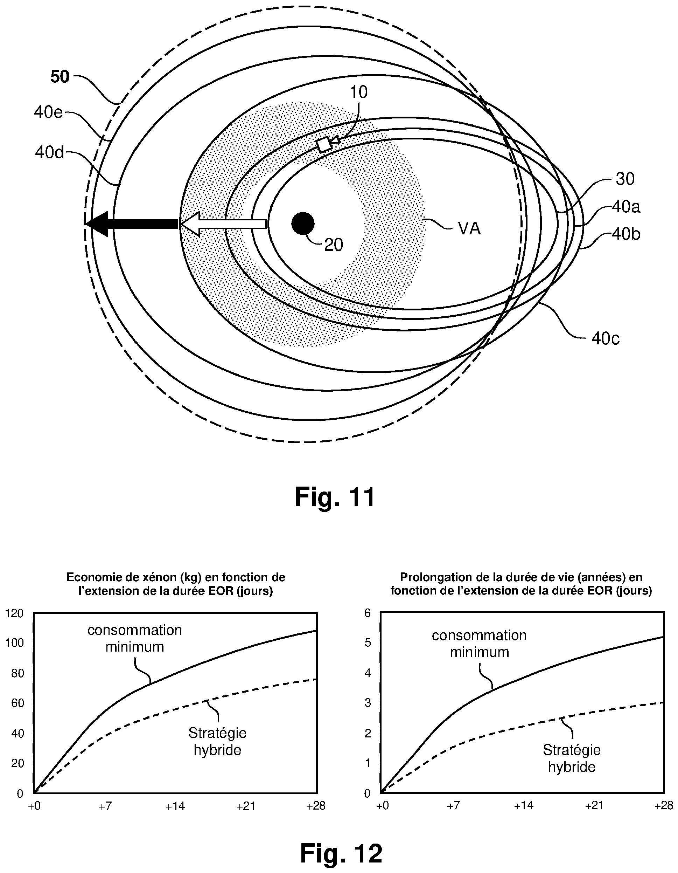

Une stratégie combinée a donc été mise en place pour contrecarrer ce problème selon la configuration ci-dessous décrite en référence à la figure 11.

Après la séparation et jusqu'à une altitude de périgée d'environ 12000km, le satellite 10, sur des orbites à faible inclinaison, passe régulièrement deux fois par orbite dans les ceintures de Van Allen (VA), c'est notamment le cas de l'orbite d'injection 30 et de l'orbite intermédiaire 40a sur la figure 11. Afin de réduire autant que possible cette période critique, une stratégie EOR de durée minimum est appliquée jusqu'à ce que l'altitude du périgée de l'orbite du satellite dépasse l'altitude maximale des ceintures de VA. Cette première phase est indiquée par une flèche pleine blanche sur la figure 11, le franchissement des ceintures de VA (dépassement de leur altitude maximale) correspondant à l'orbite intermédiaire 40c. La mise en place de la stratégie de durée minimum en amont des ceintures de VA est d'autant plus pertinente que certaines orbites intermédiaires 40b marquent un passage prolongé (sans sortie) dans lesdites ceintures, ce qui expose le satellite à une dose plus importante de radiations.

Une fois la limite d'altitude critique du périgée atteinte (orbite 40c), la stratégie est modifiée et une stratégie EOR de consommation minimum est appliquée jusqu'à la fin du transfert EOR, autrement dit jusqu'à l'arrivée en orbite géostationnaire 50. Cette deuxième phase est indiquée par une flèche pleine noire sur la figure 11.

Il s'agit donc d'une stratégie « hybride », adaptée aux lanceurs à faible inclinaison en raison de leur passage prolongé dans les ceintures de Van Allen, qui a été évaluée par les inventeurs sur les cas les plus critiques en termes de radiations et qui s'est révélée porter des résultats aussi avantageux que ceux de la stratégie de consommation minimum.

La figure 12 montre que l'économie de xénon et la prolongation de la durée de vie obtenues par application de la stratégie hybride demeurent très avantageuses. La durée de vie peut par exemple être prolongée de 3 ans.

De plus, l'augmentation de la dose de radiations reçue par les panneaux solaires du satellite est significativement réduite grâce à la stratégie hybride comparée à la stratégie de consommation minimum, environ 7% contre 30%.

L'évolution des paramètres orbitaux lors de l'application de la stratégie hybride a permis de constater que l'altitude de l'apogée, pour chaque cas étudié, augmente de façon moins importante qu'avec une stratégie de durée minimum, mais de façon plus importante qu'avec une stratégie de consommation minimum.

Les autres résultats de la stratégie hybride ne présentent aucun effet indésirable pour le satellite ou pour sa mission.

Les résultats de cette stratégie hybride ont donc permis d'établir, en lien avec une consommation minimum, une approche générale distinguant les cas de lancement selon leurs inclinaisons.

Pour les lancements à forte inclinaison, où la consommation de xénon lors du transfert EOR est généralement élevée (comparée aux cas Ariane) mais où la dose de rayonnement reçue par les panneaux solaires est faible, l'utilisation de stratégies EOR à consommation minimum est recommandée afin de maximiser les économies de xénon sans effets négatifs majeurs.

Pour les lancements à faible inclinaison (tels que les cas Ariane) pour lesquels la consommation de xénon est inférieure aux cas précédents mais où la dose de rayonnement reçue est beaucoup plus importante, une approche EOR hybride avec une stratégie EOR de durée minimum au début et une stratégie EOR de consommation minimum par la suite est préférable.

En outre, pour le cas particulier de certains lanceurs à forte inclinaison avec une altitude d'apogée juste au-dessus de 27000km, la question de la masse de xénon est critique et nécessite d'adopter une stratégie de consommation minimum. Les doses de radiations restent compatibles avec la dose admissible.

Le choix d'une stratégie ou d'une autre doit être analysé pour chaque mission, en fonction des différentes contraintes, et adapté, selon le besoin, pour atteindre l'optimisation visée.

Le procédé d'optimisation selon l'invention ne présente pas de vulnérabilité supplémentaire vis-à-vis des évènements rencontrés en environnement spatial par rapport à un transfert EOR classique. La gestion d'évènements à risque comme la collision de débris ou de micrométéorites, l'érosion par l'oxygène toxique, et autres, peut être réalisée avec les mêmes stratégies que celles appliquées dans le cas des transferts EOR classiques, connues de l'homme du métier, l'objectif ici n'étant pas de lister de manière exhaustive les vérifications et validations des différents aspects de mission concernés par la mise en oeuvre de la présente invention.

L'application du procédé d'optimisation n'implique ni modifications majeures ni perturbations des opérations de contrôle et de commande de la mission spatiale. Les points ayant occasionnés certaines difficultés aux inventeurs ont également donné lieu à des perfectionnements innovants.

Plus particulièrement, lorsque la durée du transfert EOR est prolongée jusqu'à 28 jours, le pourcentage de temps pendant lequel la poussée réduite est appliquée peut monter jusqu'à 52% de la durée totale dudit transfert. De plus, lorsque la poussée appliquée pendant la phase de poussée nominale peut être augmentée, le procédé d'optimisation devient de plus en plus efficace avec des prolongations de la durée de vie très avantageuses (environ un an de plus lorsqu'un propulseur supplémentaire peut être utilisé à 4,5kW).

Ces deux résultats peuvent être combinés pour renforcer l'approche proposée. Ainsi, lorsque le satellite est exploité à faible poussée, les marges de puissance deviennent importantes et le satellite peut stocker de l'énergie qui peut être utilisée pendant les phases de forte poussée en plus de la puissance nominale disponible en régime permanent.

Grâce à cette configuration, la puissance allouée aux propulseurs électriques pendant les phases de forte poussée augmente et permet en conséquence de faire augmenter la poussée totale du satellite pendant lesdites phases. La durée du transfert EOR peut donc être plus courte et plus efficace en termes de consommation de xénon (la différence de poussée entre la faible poussée et la forte poussée est augmentée).

Il est important de noter que le point fondamental de cette nouvelle stratégie est le stockage de l'énergie pendant les phases de poussée réduite, c'est-à-dire lors de l'étape 420 du procédé. Ce stockage peut être effectué soit avec la batterie, auquel cas ladite batterie est chargée à un taux élevé pendant les phases de poussée réduite et fournit un support énergétique aux panneaux solaires pendant les phases de forte poussée, soit avec l'inertie thermique du satellite. En effet, pour cette dernière alternative, la marge restante de puissance pendant les phases de faible poussée peut être utilisée pour surchauffer le satellite au-dessus de la température minimale de fonctionnement. Dès lors, au démarrage de la phase de forte poussée, les boucles de régulation thermique sont réinitialisées à la température minimale de fonctionnement, cette réinitialisation entraîne l'arrêt des réchauffeurs thermiques pendant la période où les températures diminuent mais restent supérieures aux points de régulation. L'énergie ainsi économisée peut être réaffectée aux propulseurs électriques.

Enfin, il ressort clairement de la présente description que certaines étapes et opérations du procédé d'optimisation du transfert d'orbite par propulsion électrique peuvent être adaptées, modifiées ou remplacées, sans pour autant sortir du cadre de l'invention, défini par les revendications.

## Revendications

1. Procédé de transfert d'un engin spatial (10), tel qu'un satellite artificiel, d'une orbite initiale (30) elliptique vers une orbite finale (50) dudit engin autour d'un corps de masse prépondérante, tel qu'une planète (20), ledit engin empruntant au moins une orbite intermédiaire (40) elliptique, propulsé par des moyens de propulsion électrique (12, 13), ledit procédé comprenant, lorsque l'engin spatial se trouve sur une orbite intermédiaire, une étape (410) de poussée nominale, dans laquelle lesdits moyens de propulsion génèrent une poussée nominale tant que ledit engin est sur au moins une partie d'un premier arc orbital (41) passant par un apogée A de ladite orbite intermédiaire, et une étape (420) de poussée minimale, dans laquelle les moyens de propulsion sont en partie arrêtés ou réduits en régime tant que ledit engin est sur au moins une partie (43) d'un deuxième arc orbital (42) passant par un périgée P de ladite orbite intermédiaire, les deux arcs orbitaux étant complémentaires, ledit procédé étant **caractérisé en ce qu'**une batterie électrique de l'engin spatial (10) est chargée par un générateur solaire (15) dudit engin pendant l'étape (420) de poussée minimale à un taux supérieur à un taux de charge de ladite batterie pendant l'étape (410) de poussée nominale, pour fournir un support d'énergie audit engin lors de l'étape (410) de poussée nominale, et **en ce qu'**après la charge de la batterie lors de l'étape (420) de poussée minimale, une quantité d'énergie restante dans le générateur solaire est utilisée pour surchauffer ledit engin afin d'économiser de l'énergie lors d'une réinitialisation des opérations de régulation thermique pendant l'étape (410) de poussée nominale.

2. Procédé selon la revendication 1, dans lequel les moyens de propulsion électrique comportent au moins un propulseur fixe (12), générant une poussée de direction parallèle à un axe Z lié l'engin spatial (10) et tangentiel à la trajectoire dudit engin lors du transfert, et au moins deux assemblages déployables de propulsion (13), générant une poussée de direction orientable et comportant chacun au moins un propulseur (1311), et dans lequel l'étape (420) de poussée minimale consiste à arrêter tout propulseur fixe (12) et à maintenir en marche un propulseur (1311) par assemblage déployable de propulsion (13).

3. Procédé selon l'une des revendications 1 ou 2, dans lequel le premier arc orbital (41) et le deuxième arc orbital (42) de chaque orbite intermédiaire (40) présentent une symétrie par rapport à un grand axe de ladite orbite, le premier arc présentant une longueur supérieure à celle du deuxième arc.

4. Procédé selon l'une quelconque des revendications précédentes, comprenant en outre une étape (412) de transition de l'étape (410) de poussée nominale à l'étape (420) de poussée minimale et une étape (421) de transition de l'étape (420) de poussée minimale à l'étape (410) de poussée nominale, chacune desdites étapes de transition comprenant des modifications progressives du régime de fonctionnement de tout ou partie des moyens de propulsion électrique (12, 13).

5. Procédé selon l'une quelconque des revendications précédentes, mis en oeuvre par l'engin spatial (10) de façon itérative sur une pluralité d'orbites intermédiaires (40) successives tant que ledit engin n'a pas atteint l'orbite finale (50).

6. Procédé selon l'une quelconque des revendications précédentes, dans lequel l'engin spatial (10) est un satellite de télécommunications destiné à être opérationnel dans une orbite géostationnaire (50), ledit satellite étant initialement placé dans une orbite d'injection (30) d'inclinaison non nulle par un véhicule de lancement, le transfert dudit satellite de l'orbite d'injection vers l'orbite géostationnaire étant réalisé via une approche de mise à poste par propulsion électrique dite Electric Orbit Raising, EOR.

7. Produit programme d'ordinateur **caractérisé en ce qu'**il comporte un ensemble d'instructions de code de programme qui, lorsqu'elles sont exécutées par un processeur, mettent en oeuvre un procédé de transfert d'orbite selon l'une des revendications 1 à 6.

8. Engin spatial (10), de type satellite artificiel, sonde ou véhicule, **caractérisé en ce qu'**il comprend un produit programme d'ordinateur selon la revendication 7.

9. Procédé de commande à distance d'un engin spatial (10) selon la revendication 8, dans lequel ledit engin est commandé à distance par un dispositif de commande déterminant successivement des signaux de commande et les envoyant audit engin pour la réalisation de tout ou partie des étapes du procédé de transfert d'orbite, ledit dispositif comprenant au moins un système de contrôle et un système d'émission/réception basé au sol.

## Patentansprüche

1. Verfahren zur Überführung eines Raumfahrzeugs (10), wie eines künstlichen Satelliten, von einer anfänglichen elliptischen Umlaufbahn (30) in eine endgültige Umlaufbahn (50) des Fahrzeugs um einen Körper mit überwiegender Masse, wie einen Planeten (20), wobei das Fahrzeug mindestens eine elliptische Zwischenumlaufbahn (40) einnimmt, die durch elektrische Antriebsmittel (12, 13) angetrieben wird, wobei das Verfahren, wenn sich das Raumfahrzeug auf einer Zwischenumlaufbahn befindet, einen Nennschubschritt (410) umfasst, wobei die Antriebsmittel einen Nennschub erzeugen, solange sich das Fahrzeug mindestens auf einem Teil eines ersten Umlaufbogens (41) befindet, der durch ein Apogäum A der Zwischenumlaufbahn hindurchgeht, und eine Mindestschubschritt (420), wobei die Antriebsmittel teilweise gestoppt oder in ihrer Geschwindigkeit reduziert werden, solange sich das Fahrzeug mindestens auf einem Teil (43) eines zweiten Umlaufbogens (42) befindet, der durch ein Perigäum P der Zwischenumlaufbahn hindurchgeht, wobei die beiden Umlaufbögen komplementär sind, wobei das Verfahren **dadurch gekennzeichnet ist, dass** eine elektrische Batterie des Raumfahrzeugs (10) durch einen Solargenerator (15) des Fahrzeugs während des Mindestschubschritts (420) mit einer Rate aufgeladen wird, die größer ist als eine Rate der Aufladung der Batterie während des Nennschubschritts (410), um eine Energieversorgung des Fahrzeugs während des Nennschubschritts (410) bereitzustellen, und dass nach dem Aufladen der Batterie während des Mindestschubschritts (420) eine Menge an Energie, die im Solargenerator verbleibt, dazu verwendet wird, das Fahrzeug zu überhitzen, um bei der Rückstellung der thermischen Operationen während des Nennschubschritts (410) Energie zu sparen.

2. Verfahren nach Anspruch 1, wobei die elektrischen Antriebsmittel mindestens ein feststehendes Triebwerk (12), das einen Richtungsschub parallel zu einer mit dem Raumfahrzeug (10) verbundenen Z-Achse und tangential zur Flugbahn des Fahrzeugs während des Transfers erzeugt, und mindestens zwei entfaltbare Antriebsbaugruppen (13) umfassen, die einen lenkbaren Richtungsschub erzeugen und jeweils mindestens ein Triebwerk (1311) umfassen, und wobei der Mindestschubschritt (420) darin besteht, jedes feste Triebwerk (12) zu stoppen und ein Triebwerk (1311) pro entfaltbarer Antriebsbaugruppe (13) in Betrieb zu halten.

3. Verfahren nach einem der Ansprüche 1 oder 2, wobei der erste Umlaufbogen (41) und der zweite Umlaufbogen (42) jeder Zwischenumlaufbahn (40) eine Symmetrie in Bezug auf eine Hauptachse der genannten Umlaufbahn aufweisen, wobei der erste Bogen eine größere Länge aufweist als der zweite Bogen.

4. Verfahren nach einem der vorstehenden Ansprüche, ferner umfassend einen Übergangsschritt (412) von dem Nennschubschritt (410) zu dem Mindestschubschritt (420) und einen Übergangsschritt (421) von dem Mindestschubschritt (420) zu dem Nennschubschritt (410), wobei jeder der Übergangsschritte fortschreitende Änderungen des Betriebsregimes aller oder einiger der elektrischen Antriebsmittel (12, 13) umfasst.

5. Verfahren nach einem der vorstehenden Ansprüche, das von dem Raumfahrzeug (10) iterativ über eine Vielzahl von aufeinanderfolgenden Zwischenumlaufbahnen (40) durchgeführt wird, solange das Fahrzeug nicht die Endumlaufbahn (50) erreicht hat.

6. Verfahren nach einem der vorstehenden Ansprüche, wobei es sich bei dem Raumfahrzeug (10) um einen Telekommunikationssatelliten handelt, der dazu bestimmt ist, in einer geostationären Umlaufbahn (50) betriebsmäßig eingesetzt zu werden, wobei der Satellit anfänglich von einem Trägerfahrzeug in eine Injektionsbahn (30) mit einer Neigung ungleich Null gebracht wird, wobei die Überführung des Satelliten von der Injektionsbahn in die geostationäre Umlaufbahn über einen elektrischen Antriebsansatz zur Stationierung des elektrischen Bahnanhebungsansatzes, EOR, realisiert wird.

7. Computerprogrammprodukt, **dadurch gekennzeichnet, dass** es einen Satz von Computercodeanweisungen umfasst, die, wenn sie von einem Prozessor ausgeführt werden, ein Umlaufbahnübertragungsverfahren nach einem der Ansprüche 1 bis 6 implementieren.

8. Raumfahrzeug (10) vom Typ künstlicher Satellit, Sonde oder Fahrzeug, **dadurch gekennzeichnet, dass** es ein Computerprogrammprodukt nach Anspruch 7 umfasst.

9. Verfahren zur Fernsteuerung eines Raumfahrzeugs (10) nach Anspruch 8, wobei das Fahrzeug durch eine Steuervorrichtung ferngesteuert wird, die nacheinander Steuersignale bestimmt und sie an das Fahrzeug sendet, um alle oder einige der Schritte des Umlaufbahnübertragungsverfahrens zu erreichen, wobei die Vorrichtung mindestens ein Steuersystem und ein bodengestütztes Sende-/Empfangssystem umfasst.

## Claims

1. A method for transferring a spacecraft (10), such as an artificial satellite, from an initial elliptical orbit (30) to a final orbit (50) of said craft around a predominant mass body, such as a planet (20), said craft taking at least one intermediate elliptical orbit (40), propelled by electric propulsion means (12, 13), said method comprising, when the spacecraft is in an intermediate orbit, a nominal thrust step (410), in which said propulsion means generate a nominal thrust as long as said craft is on at least one portion of a first orbital arc (41) passing through an apogee A of said intermediate orbit, and a minimum thrust step (420), in which the propulsion means are partially stopped or reduced in speed as long as said craft is on at least one portion (43) of a second orbital arc (42) passing through a perigee P of said intermediate orbit, the two orbital arcs being complementary, said method being **characterised in that** an electric battery of the spacecraft (10) is charged by a solar generator (15) of said craft during the minimum thrust step (420) at a rate which is higher than a charging rate of said battery during the nominal thrust step (410), to provide an energy support to said craft during the nominal thrust step (410), and **in that** after charging the battery during the minimum thrust step (420), an amount of energy remaining in the solar generator is used to overheat said craft in order to save energy during a reset of the thermal regulation operations during the nominal thrust step (410).

2. The method according to claim 1, wherein the electric propulsion means include at least one fixed thruster (12), generating a steering thrust which is parallel to a Z axis linked to the spacecraft (10) and tangential to the trajectory of said craft during the transfer, and at least two deployable propulsion assemblies (13), generating an orientable steering thrust and each including at least one thruster (1311), and wherein the minimum thrust step (420) consists in stopping any fixed thruster (12) and in keeping running a thruster (1311) by a deployable propulsion assembly (13).

3. The method according to one of claims 1 or 2, wherein the first orbital arc (41) and the second orbital arc (42) of each intermediate orbit (40) have a symmetry relative to a major axis of said orbit, the first arc having a length which is greater than that of the second arc.

4. The method according to any one of the preceding claims, further comprising a step (412) of transition from the nominal thrust step (410) to the minimum thrust step (420) and a step (421) of transition from the minimum thrust step (420) to the nominal thrust step (410), each of said transition steps comprising progressive modifications of the operating speed of all or part of the electric propulsion means (12, 13).

5. The method according to any one of the preceding claims, implemented by the spacecraft (10) iteratively over a plurality of successive intermediate orbits (40) as long as said craft has not reached the final orbit (50).

6. The method according to any one of the preceding claims, wherein the spacecraft (10) is a telecommunications satellite intended to be operational in a geostationary orbit (50), said satellite being initially placed in an injection orbit (30) of non-zero inclination by a launch vehicle, the transfer of said satellite from the injection orbit to the geostationary orbit being carried out via an approach for satellite positioning by electric propulsion called Electric Orbit Raising, EOR.

7. A computer program product **characterised in that** it includes a set of program code instructions which, when they are executed by a processor, implement an orbit transfer method according to one of claims 1 to 6.

8. A spacecraft (10), of the artificial satellite, probe or vehicle type, **characterised in that** it comprises a computer program product according to claim 7.

9. A method for remotely controlling a spacecraft (10) according to claim 8, wherein said craft is remotely controlled by a control device successively determining control signals and sending them to said craft for carrying out all or part of the steps of the orbit transfer method, said device comprising at least one control system and a ground-based transmission/reception system.
